# EUROPÄISCHE PATENTANMELDUNG

(11) **EP 3 372 089 A1**
(43) Veröffentlichungstag der Anmeldung: **12.09.2018**
(21) Anmeldenummer: 17174995.5
(22) Anmeldetag: 08.06.2017
(51) Int. Cl.: A23C 3/03, A23L 2/46, A23L 3/02

(54) **PASTEURISIERUNGSVORRICHTUNG**

(30) Priorität: 10.03.2017 EP 17160414
(71) Anmelder: Red Bull GmbH, 5330 Fuschl am See (AT)
(72) Erfinder: CONCIN, Roland, 5330 Fuschl am See (AT); EDER, Harald, 5301 Eugendorf (AT); VIECHTBAUER, Volker, 5330 Fuschl am See (AT)
(74) Vertreter: Burger, Hannes

(57) **Zusammenfassung**

Die Erfindung betrifft eine Pasteurisierungsvorrichtung (1) zur Behandlung von in verschlossenen Behältnissen (2) abgefüllten Lebensmitteln. Es ist wenigstens eine Behandlungszone (5, 6, 7, 8, 9, 10) zur Behandlung der Lebensmittel mit einer temperierten Prozessflüssigkeit vorgesehen. Alle Teilabschnitte von Innenflächen (22, 23, 24) eines Bodenabschnitts (19), Seitenwänden (20) und Übergangsabschnitten (21) zwischen dem Bodenabschnitt (19) und den Seitenwänden (21) der wenigsten einen Behandlungszone (5, 6, 7, 8, 9, 10) sind mathematisch glatt ausgestaltet, wobei alle Übergänge zwischen aneinandergrenzenden Teilabschnitten der Innenflächen (22, 23, 24) mathematisch glatt ausgestaltet sind.

## Beschreibung

Die Erfindung betrifft eine Pasteurisierungsvorrichtung zur thermischen Behandlung von in verschlossenen Behältnissen abgefüllten Lebensmitteln.

Pasteurisierungsvorrichtungen, in welchen Lebensmittel einer Temperaturbehandlung unterzogen werden, sind bekannt. Durch die Temperaturbehandlung bzw. Temperierung kann unter anderem eine längere Haltbarkeit für die Lebensmittel erzielt werden. Eine verbreitete Ausführungsform sind zum Beispiel sogenannte Tunnelpasteure, in welchen in Behältnissen befindliche Lebensmittel dadurch temperaturbehandelt werden, indem die Behältnisse in einer oder in mehreren, aufeinanderfolgenden Behandlungszonen bzw. Behandlungskammern mit einer temperierten Prozessflüssigkeit beaufschlagt werden.

Aus ökologischen, energietechnischen und ökonomischen Gründen wird die Prozessflüssigkeit in Pasteurisierungsvorrichtungen üblicherweise zumindest teilweise zur Behandlung bzw. Temperierung wiederverwendet, das heißt im Kreis um die Behandlungszone(n) geführt. Hierbei ist ein fortwährendes Einbringen von Verunreinigungen in die Prozessflüssigkeit aus der Umgebung nicht zu vermeiden. Zwar wurden in der Vergangenheit bereits Maßnahmen zur fortwährenden Reinigung der Prozessflüssigkeit vorgeschlagen, jedoch kann bei bestehenden Pasteurisierungsvorrichtungen eine stetig zunehmende Bildung von Ablagerungen , insbesondere im Bereich von Innenflächen der Pasteurisierungsvorrichtungen, nicht ausreichend hintangehalten werden. Hierdurch ist in gewissen Abständen eine Reinigung der Innenflächen von Pasteurisierungsvorrichtungen erforderlich, um ein Entfernen von solchen Ablagerungen durchzuführen. Bei bestehenden Pasteurisierungsvorrichtungen ist die Durchführung solcher Reinigungen aufgrund der Bauweise jedoch schwierig und aufwendig. Dies im Besonderen im Bereich von kantigen Übergängen der Innenflächen, in welchen Bereichen Ablagerungen besonders verstärkt auftreten.

Aufgabe der Erfindung war es, eine verbesserte Pasteurisierungsvorrichtung bereitzustellen, bei welcher insbesondere eine Reinigung mit möglichst geringem Aufwand und verbesserter Reinigungseffizienz durchgeführt werden kann.

Dies Aufgabe wird durch eine Pasteurisierungsvorrichtung gemäß dem Wortlaut der Patentansprüche gelöst.

Es wird eine Pasteurisierungsvorrichtung bereitgestellt, welche Pasteurisierungsvorrichtung wenigstens eine Behandlungszone zur Behandlung von in verschlossenen Behältnissen abgefüllten Lebensmitteln mit einer temperierten Prozessflüssigkeit umfasst. Die wenigstens eine Behandlungszone weist mindestens eine Zufuhrvorrichtung zur Zuführung temperierter Prozessflüssigkeit und wenigstens einen Ablauf zum Abführen der Prozessflüssigkeit auf.
Die wenigstens eine Behandlungszone weist zumindest einen Bodenabschnitt, zwei Seitenwände und Übergangsabschnitte zwischen dem Bodenabschnitt und den Seitenwänden auf. Hierbei weisen der Bodenabschnitt, die Seitenwände und die Übergangsabschnitte jeweils eine zu einem Innenraum der Behandlungszone weisende Innenfläche auf.
Der wenigstens einen Behandlungszone ist mindestens eine Zufuhrvorrichtung zur Zuführung temperierter Prozessflüssigkeit zugeordnet. Des Weiteren weist die wenigstens eine Behandlungszone einen Ablauf zum Abführen der Prozessflüssigkeit auf, welcher Ablauf im Bereich des Bodenabschnitts angeordnet ist.
Außerdem weist die wenigstens einen Behandlungszone zwei Öffnungen zur Zuführung und Abführung der Behältnisse auf, wobei ein Fördermittel zur Beförderung der Behältnisse durch die wenigstens eine Behandlungszone vorgesehen ist.

Wesentlich ist, dass alle Teilabschnitte der Innenfläche des Bodenabschnitts, alle Teilabschnitte der Innenflächen der Übergangsabschnitte und alle Teilabschnitte der Innenflächen der Seitenwände mathematisch glatt ausgestaltet sind. Alle Übergänge zwischen aneinandergrenzenden Teilabschnitten der Innenflächen sind mathematisch glatt ausgestaltet.

Der Begriff Behandlungszone kann synonym mit den Begriffen Behandlungskammer oder Temperierungszone bzw. Temperierungskammer verwendet werden, wobei natürlich jede vorhandene Behandlungszone bzw. Behandlungskammer zumindest zwei Öffnungen zum Ein- und Ausführen der Behältnisse aufweisen muss.

Durch die baulichen Merkmale kann eine Pasteurisierungsvorrichtung bereitgestellt werden, welche ohne großen Aufwand gereinigt werden kann, da alle Innenflächen der wenigstens einen Behandlungszone verhältnismäßig leicht zugänglich bzw. zu reinigen sind. Des Weiteren kann durch diese Ausgestaltung der wenigstens einen Behandlungszone bzw. Behandlungskammer auch schon grundsätzlich die Bildung von Ablagerungen an den Innenflächen der wenigstens einen Behandlungszone hintangehalten werden. Bezüglich eines Innenraums der wenigstens einen Behandlungszone tal-artige Übergänge bzw. Kanten, in deren Vertiefungen sich vermehrt Ablagerungen niederschlagen können, sind in der oder den Behandlungszone(n) nicht vorhanden. Dies ist weiters für die Reinigung von Vorteil, da solche kantigen Übergänge auch für Reinigungsmaßnahmen besonders schwer zugänglich wären. Durch die verbessere Ausgestaltung der wenigstens einen Behandlungszone kann insbesondere die Reinigungseffizienz für die mit der Prozessflüssigkeit im Betrieb in Kontakt stehenden Innenflächen deutlich verbessert werden.

Bei einer Weiterbildung der Pasteurisierungsvorrichtung kann vorgesehen sein, dass alle Punkte auf der Innenfläche des Bodenabschnitts für alle möglichen Raumrichtungen einen Krümmungsradius von mindestens 20 mm, vorzugsweise mindestens 100 mm aufweisen. Des Weiteren kann vorgesehen sein, dass alle Punkte auf der Innenfläche des Übergangsabschnittes für alle möglichen Raumrichtungen einen Krümmungsradius von mindestens 10 mm, vorzugsweise mindestens 50 mm aufweisen..

Durch diese Merkmale können jeweils Mindestkrümmungsradien für die Innenflächen definiert werden, wodurch eine verbesserten Reinigungseffizienz für die Innenflächen der wenigstens eine Behandlungszone bereitgestellt werden kann. Außerdem kann auf diese Weise im Betrieb der Pasteurisierungsvorrichtung die Bildung von Ablagerungen im Bereich des Bodenabschnitts und den Übergangsabschnitten wirksam hintangehalten werden.

Im Speziellen kann vorgesehen sein, dass die Innenfläche des Bodenabschnitts wannenförmig ausgestaltet ist. Die Seitenwände der wenigstens einen Behandlungszone können zum Beispiel im Wesentlichen eben ausgestaltet sein. Die Pasteurisierungsvorrichtung kann außerdem Sammelbecken für die Prozessflüssigkeit aufweisen, welche Teil eines Umlaufkreislaufes zur Wiederverendung der Prozessflüssigkeit sein können. Auch alle Teilabschnitte einer Innenfläche eines solchen Sammelbeckens können mathematisch glatt ausgestaltet sein, wodurch auch die Reinigungseffizienz für ein solches Sammelbecken verbessert werden kann.

Bei einer weiteren Weiterbildung der Pasteurisierungsvorrichtung kann vorgesehen sein, dass der Ablauf der wenigstens einen Behandlungszone einen in den Bodenabschnitt mündenden Übergang aufweist, wobei eine Innenfläche dieses Übergangs, bezogen auf den Innenraum der wenigstens einen Behandlungszone, vollumfänglich gekrümmt, aber an jeder Stelle glatt ausgestaltet ist.

Hierdurch können auch eine verbesserte Reinigungseffizienz und eine Verringerung der Tendenz zur Bildung von Ablagerungen im Bereich des Ablaufs bereitgestellt werden.

Bei einer weiteren Ausgestaltungsform der Pasteurisierungsvorrichtung kann vorgesehen sein, dass die wenigstens eine Behandlungszone einen oberen Abdeckungsabschnitt und weitere Übergangsabschnitte zwischen dem oberen Abdeckungsabschnitt und den Seitenwänden aufweist, wobei alle Teilabschnitte einer Innenfläche des oberen Abdeckungsabschnitts und alle Teilabschnitte von Innenflächen der weiteren Übergangsabschnitte mathematisch glatt ausgestaltet sind, wobei alle Übergänge zwischen aneinandergrenzenden Teilabschnitten dieser Innenflächen mathematisch glatt ausgestaltet sind.

Hierdurch ist auch eine Abdeckung für die wenigstens eine Behandlungszone bereitgestellt. Von Vorteil ist bei dieser Ausgestaltungsform, dass eine verbesserte Abschirmung des Innenraums der wenigstens einen Behandlungszone von der Umgebung gegeben ist, was sich unter anderem hinsichtlich Energieeffizienz im Betrieb vorteilhaft auswirkt. Des Weiteren kann eine Abdeckung für die wenigstens eine Behandlungszone bereitgestellt werden, welche ebenfalls mit hoher Effizienz zu reinigen ist, wobei auch eine Bildung von Ablagerungen grundsätzlich hintangehalten werden kann.

Weiters kann es sinnvoll sein, dass die Innenfläche des oberen Abdeckungsabschnitts eben oder bezogen auf den Innenraum konkav gekrümmt ausgestaltet ist, und dass die Innenflächen der weiteren Übergangsabschnitte bezogen auf den Innenraum konkav gekrümmt ausgestaltet sind.

Durch diese Merkmale kann ein im Besonderen ein Ablaufen bzw. Abfließen von Prozessflüssigkeit vom Bereich des oberen Abdeckungsabschnitts in den Bereich des Bodenabschnittes verbessert werden. In den Bereich des oberen Abdeckungsabschnitts kann Prozessflüssigkeit zum Beispiel durch Spritzen oder Kondensation gelangen. Durch diese Merkmale kann ein Abfließen der Prozessflüssigkeit aus dem oberen Bereichen zu dem Ablauf im Bodenabschnitt verbessert werden.

Hierbei kann auch vorgesehen sein, dass alle Punkte auf der Innenfläche der weiteren Übergangsabschnitte für alle möglichen Raumrichtungen einen Krümmungsradius von mindestens 10 mm, vorzugsweise mindestens 50 mm aufweisen.

Hierdurch können sowohl ein Abfließen von Prozessflüssigkeit, als auch die Reinigungseffizienz für diese Innenflächen nochmalig weiter verbessert werden.

Bei einer weiteren Weiterbildung der Pasteurisierungsvorrichtung kann vorgesehen sein, dass die wenigstens eine Behandlungszone zumindest eine runde oder ovale Öffnung aufweist, wobei eine Innenseite eines Umrandungssegments der Öffnung mathematisch glatt ist.

Hierdurch kann auch die Reinigungseffizienz im Bereich solcher Öffnungen verbessert werden. Eine Öffnung kann beispielsweise zum Einführen diverser Sensorelemente, oder anderer funktioneller Elemente in den Innenraum der wenigstens einen Behandlungszone vorgesehen sein. Solche Öffnungen können aber auch um Zuführen der Prozessflüssigkeit in eine Behandlungszone vorgesehen sein, indem etwa Zuführmittel der Zufuhrvorrichtung via solche Öffnungen in den Innenraum einer Behandlungszone eingeführt sind.

Bei einer bevorzugten Ausgestaltungsform der Pasteurisierungsvorrichtung kann vorgesehen sein, dass alle Übergänge zwischen Teilabschnitten von aneinandergrenzenden Innenflächen mathematisch glatt ausgestaltet sind, oder dass alle Übergänge zwischen Teilabschnitten von aneinandergrenzenden Innenflächen berggrat-artig zum Innenraum hin vorspringend ausgestaltet sind.

Durch diese Merkmale kann die Tendenz zur Bildung von Ablagerungen im Bereich von aneinandergrenzenden Innenflächen der wenigstens einen Behandlungszone verringert werden, sowie die Reinigungseffizienz für diese Bereiche verbessert werden.

Grundsätzlich kann vorgesehen sein, dass die Innenflächen der wenigstens einen Behandlungszone durch ein Material, ausgewählt aus einer Gruppe bestehend aus Kunststoff, Kunststoffverbundmaterial, faserverstärkten Kunststoff, Edelstahl, Aluminium oder Keramik gebildet sind. Im Speziellen können polierte Materialien bzw. Materialien mit möglichst geringer Oberflächenrauheit und gleichzeitig hoher Widerstandsfähigkeit gegenüber der Prozessflüssigkeit verwendet bzw. eingesetzt werden, wie etwa polierter Edelstahl oder Aluminium, oder geformte Kunststoffteile.

Es kann auch von Vorteil sein, wenn der wenigstens einen Behandlungszone eine Waschvorrichtung zur Reinigung der jeweiligen Innenflächen zugeordnet ist.

Durch dieses Merkmal kann im Bedarfsfall eine Reinigung der Innenflächen der wenigstens einen Behandlungszone bzw. Behandlungskammer vorgenommen werden. Hierbei kann vorgesehen sein, dass die Waschvorrichtung zur zumindest teilautomatisierten Reinigung der jeweiligen Innenflächen ausgebildet ist.

Bei einer Weiterbildung der Pasteurisierungsvorrichtung kann vorgesehen sein, dass mehrere Behandlungszonen aneinandergrenzend angeordnet sind, wobei Öffnungen zweier aneinandergrenzender Behandlungszonen einen Durchtrittkanal für das Fördermittel und die Behältnisse ausbilden, wobei alle Übergänge zwischen Innenflächen benachbarter Behandlungszonen im Bereich eines Durchtrittkanals mathematisch glatt oder berggratartig zu den Innenräumen der Behandlungszonen vorspringend ausgestaltet sind.

Durch diese Merkmale kann eine Pasteurisierungsvorrichtung mit mehreren Behandlungszonen bereitgestellt werden, bei welcher auch die Übergänge zwischen Innenflächen im Bereich von Durchtrittkanälen mit verbesserter Effizienz gereinigt werden können. Des Weiteren ist auch die Tendenz zur Bildung von Ablagerungen im Bereich der Innenflächen von Durchtrittkanälen verringert.

In weiterer Folge kann auch vorgesehen sein, eine durch die Innenflächen aneinandergrenzender Bodenabschnitte gebildete Innenfläche im Bereich eines Durchtrittkanals zu den Innenräumen der Behandlungszonen konvex gekrümmt ausgestaltet ist, wobei im Bereich aneinandergrenzender Bodenabschnitte alle Punkte der Innenfläche für alle möglichen Raumrichtungen einen Krümmungsradius von mindestens 50 mm, vorzugsweise mindestens 100 mm aufweisen.

Hierdurch kann die Reinigungseffizienz auch für die Innenfläche im Bereich eines Durchtrittkanals im Bereich der aneinandergrenzenden Bodenabschnitte wirksam verbessert werden.

Es kann in diesem Zusammenhang aber auch vorgesehen sein, dass alle Teilabschnitte der Innenflächen der Bodenabschnitte mit einer Vertikalerstreckung von mindestens 10 cm, einen Steigungswinkel gegenüber einer Horizontalebene von höchstens 45° aufweisen.

Hierdurch können die Innenflächen der Bodenabschnitte der Behandlungszonen besonders flach ausgestaltet werden, was beispielsweise hinsichtlich einer Mobilität für eine mobile Reinigungsvorrichtung zur automatisierten Reinigung der Innenflächen Vorteile bringt, da alle Teilabschnitte der Innenfläche eines Bodenabschnitts der Behandlungszonen für eine solche, mobile Reinigungsvorrichtung erreichbar sind. Des Weiteren können besonders sanfte Übergänge zwischen benachbarten Behandlungszonen im Bereich deren Bodenabschnitte realisiert werden. Dies erleichtert zum Beispiel einen problemlosen Übertritt einer mobilen Reinigungsvorrichtung von einer Behandlungszone in eine jeweils benachbarte Behandlungszone.

In weiterer Folge kann daher vorgesehen sein, dass den Innenflächen der Bodenabschnitte und der oder den Innenfläche(n) im Bereich aneinandergrenzender Bodenabschnitte im Bereich des Durchtrittkanals oder der Durchtrittkanäle eine mobile Reinigungsvorrichtung zugeordnet ist.

Zweckmäßig kann schließlich auch eine Ausgestaltungform der Pasteurisierungsvorrichtung sein, bei welcher die Zufuhrvorrichtung, sowie der Ablauf der wenigstens einen Behandlungszone mit einem Umlaufkreislauf zur Wiederverwendung der Prozessflüssigkeit leitungsverbunden sind, wobei dem Umlaufkreislauf ein Entnahmemittel zur Entnahme einer Teilmenge pro Zeiteinheit der Prozessflüssigkeit aus dem Umlaufkreislauf zugeordnet ist, und dass die Pasteurisierungsvorrichtung eine Reinigungsvorrichtung, aufweisend wenigstens eine Membranfiltrationsvorrichtung zur Reinigung der pro Zeiteinheit entnommenen Teilmenge der Prozessflüssigkeit umfasst, und ein Rückführmittel zur Rückführung der gereinigten Prozessflüssigkeit in die wenigstens eine Behandlungszone umfasst.

Durch diese Merkmale kann die Prozessflüssigkeit im Betrieb der Pasteurisierungsvorrichtung fortwährend zur Behandlung bzw. Temperierung der Behältnisse bzw. der Lebensmittel wiederverwendet werden. Außerdem kann im Betrieb der Pasteurisierungsvorrichtung pro Zeiteinheit fortwährend eine Teilmenge der Prozessflüssigkeit aus dem Umlaufkreislauf entnommen, mittels der Reinigungsvorrichtung gereinigt, und anschließend wieder in eine Behandlungszone zurückgeführt werden. Durch diese Vorgangsweise kann der Verschmutzungsgrad der gesamten Prozessflüssigkeit auf einem niedrigen Niveau gehalten werden. Damit kann auch der Bildung von Ablagerungen an den Innenflächen der wenigstens einen Behandlungszone entgegengewirkt werden, wodurch letztlich die Reinigungseffizienz für die Innenflächen nochmalig weiter verbessert werden kann.

Zum besseren Verständnis der Erfindung wird diese anhand der nachfolgenden Figur näher erläutert.

Es zeigt in stark vereinfachter, schematischer Darstellung:
- Fig. 1: Eine schematische Darstellung eines Ausführungsbeispiels einer Pasteurisierungsvorrichtung;
- Fig. 2: Ein Ausführungsbeispiel für eine Behandlungszone in perspektivischer Ansicht;
- Fig. 3: Eine Vertikalschnittansicht eines Ausführungsbeispiels für eine Behandlungszone einer Pasteurisierungsvorrichtung;
- Fig. 4: Eine Vertikalschnittansicht eines weiteren Ausführungsbeispiels für eine Behandlungszone einer Pasteurisierungsvorrichtung;
- Fig. 5: Ausschnittsweise eine Vertikalschnittansicht im Bereich eines Durchtrittkanals zwischen zwei Behandlungszonen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

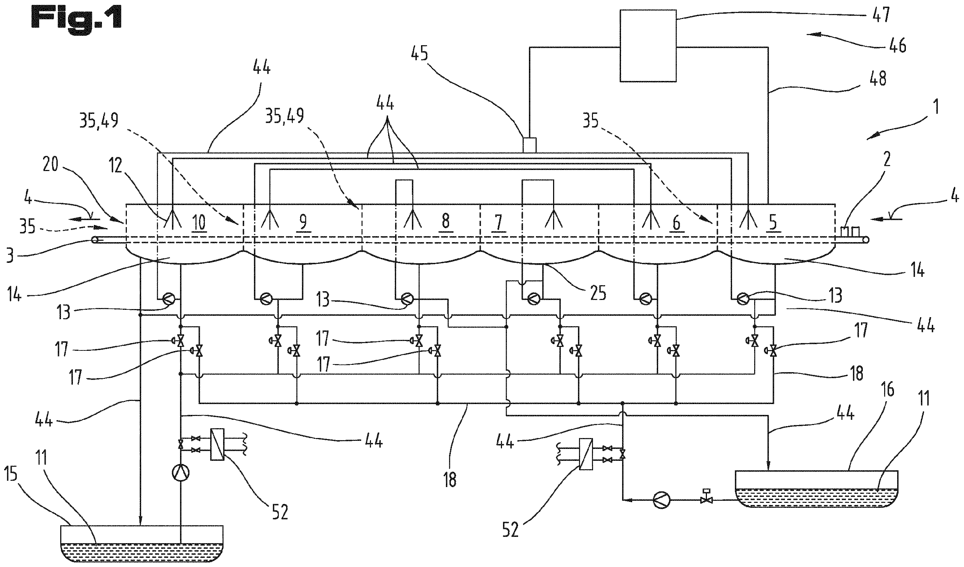

In der Fig. 1 ist ein Ausführungsbeispiel einer Pasteurisierungsvorrichtung 1 zum Pasteurisieren von in verschlossenen Behältnissen 2 abgefüllten Lebensmitteln schematisch dargestellt. Die in der Fig. 1 beispielhaft dargestellte Pasteurisierungsvorrichtung 1 ist in der Art eines sogenannten Tunnelpasteurs ausgeführt. Die dargestellte Pasteurisierungsvorrichtung 1 umfasst mehrere Behandlungszonen 5, 6, 7, 8, 9, 10, wobei ein Fördermittel 3, beispielsweise ein Förderband zur Beförderung der Behältnisse 2 in einer Transportrichtung 4 durch die aufeinanderfolgenden Behandlungszonen bzw. Behandlungskammern 5, 6, 7, 8, 9, 10 vorgesehen ist. Bei dem in der Fig. 1 dargestellten Ausführungsbespiel sind in Transportrichtung 4 zunächst zwei Anwärmzonen 5, 6, dann zwei Pasteurisierungszonen 7, 8 und schließlich zwei Abkühlzonen 9, 10 vorgesehen. Diesen Behandlungszonen 5, 6, 7, 8, 9, 10 kann im Betrieb der Pasteurisierungsvorrichtung 1 jeweils eine Prozessflüssigkeit mit bestimmter Temperatur, also eine temperierte Prozessflüssigkeit zugeführt werden.

Je nach Bedarf bzw. Einsatzzweck einer Pasteurisierungsvorrichtung können selbstverständlich auch mehr oder weniger Behandlungszonen bzw. -kammern als im Ausführungsbeispiel gemäß der Fig. 1 vorhanden sein. Ebenfalls ist möglich, dass weitere Zonen bzw. Kammern vorgesehen sind. Zum Beispiel könnte nachfolgend auf die in Transportrichtung 4 am Ende angeordnete Abkühlzone 10 beispielsweise eine weitere Zone zur Trocknung der Außenseite der Behältnisse 2 vorgesehen sein. Aus Gründen der Übersichtlichkeit sind in der Fig. 1 solche zusätzlichen Zonen nicht dargestellt. Jedenfalls ist wenigstens eine Behandlungszone bzw. Behandlungskammer 7, 8 zum Pasteurisieren der Lebensmittel in den Behältnissen 2 vorgesehen.

Zur Behandlung bzw. Temperierung und Pasteurisierung der Lebensmittel werden die Behältnisse 2 im Betrieb der Pasteurisierungsvorrichtung 1 in den Behandlungszonen 5, 6, 7, 8, 9, 10 mit einer temperierten Prozessflüssigkeit 11 beaufschlagt. In dem Ausführungsbeispiel gemäß der Fig. 1 ist hierzu jeder Behandlungszone 5, 6, 7, 8, 9, 10 eingangsseitig mindestens eine Zufuhrvorrichtung 12 zur Zuführung temperierter Prozessflüssigkeit zugeordnet, mittels welcher Zufuhrvorrichtung 12 die Prozessflüssigkeit 11 auf bzw. über die Außenseite der verschlossenen Behältnisse 2 verteilt bzw. verspritzt oder versprüht werden kann. Die Zufuhrvorrichtungen 12 können beispielsweise durch Berieselungsvorrichtungen mit einer Mehrzahl an Sprühdüsen gebildet sein, welche in jeder Zone 5, 6, 7, 8, 9, 10 beispielsweise in einem oberen und/oder seitlichen Bereich angeordnet sein können. In die jeweilige Behandlungszone 5, 6, 7, 8, 9, 10 kann die Prozessflüssigkeit 11 über die entsprechende Zufuhrvorrichtung 12 mit jeweils unterschiedlichem bzw. für jede Zone 5, 6, 7, 8, 9, 10 eingestellten Temperaturniveau eingeleitet werden, wie dies nachfolgend noch näher erläutert wird. Die Prozessflüssigkeit 11 kann den Zufuhr- bzw. Berieselungsvorrichtungen 12 der Behandlungszonen 5, 6, 7, 8, 9, 10 hierbei jeweils über eine Pumpe, insbesondere Umwälzpumpe 13 zugeführt werden.

Um ein möglichst schonendes Vorwärmen der Lebensmittel in den Behältnissen 2 zu ermöglichen kann zum Beispiel vorgesehen sein, dass die Prozessflüssigkeit 11 der Anwärmzone5 mit einer Temperatur von ca. 35 °C, und der in Transportrichtung 4 anschließenden Anwärmzone 6 mit einer Temperatur von ca. 55 °C zugeführt wird. Zur Pasteurisierung der Lebensmittel in den Behältnissen 2 kann die Zufuhr der Prozessflüssigkeit 11 in die Pasteurisierungszonen 7, 8 bei einer Temperatur von beispielsweise ca. 85 °C erfolgen, um die Behältnisse 2 bzw. die beinhalteten Lebensmittel auf eine effektive Pasteurisierungstemperatur aufzuheizen und für eine ausreichende Zeitdauer auf dieser Pasteurisierungstemperatur zu halten. Zum gezielten Abkühlen der Behältnisse 2 bzw. der Lebensmittel kann vorgesehen sein, die Prozessflüssigkeit 11 mit einer Temperatur von ca. 50 °C in die in Transportrichtung 4 zuerst angeordnete Abkühlzone 9, und mit einer Temperatur von etwa 30 °C in die in Transportrichtung 4 folgende Abkühlzone 10 einzuleiten.

Zum Erhitzen und/oder Abkühlen der Prozessflüssigkeit 11 können in bekannter Art und Weise Heizmittel und Kühlungsmittel vorgesehen sein. Solche Heizmittel und Kühlungsmittel können zum Beispiel durch Wärmetauscher 52 gebildet sein, welche primärseitig zum Beispiel von einem Heizmedium, respektive einem Kühlmedium durchströmt werden können. Beispielsweise können die Wärmetauscher 52 operativ mit einem Kondensator, respektive einem Verdampfer einer nicht näher dargestellten Wärmepumpe verbunden sein. Selbstverständlich sind auch andere Heiz- bzw. Kühlvorrichtungen zur primärseitigen Beschickung der Wärmetauscher 52 möglich.

Nach Durchströmen einer der jeweiligen Behandlungszonen 5, 6, 7, 8, 9, 10 kann die Prozessflüssigkeit 11 in einem unteren Sammelbereich 14 der Behandlungszonen 5, 6, 7, 8, 9, 10 aufgefangen und zur weiteren Verwendung aus den Zonen 5, 6, 7, 8, 9, 10 abgeführt werden. Hierzu können die Pumpen 13 eingangsseitig mit den Sammelbereichen 14 der Behandlungszonen 5, 6, 7, 8, 9, 10 über Abläufe 25 leitungsverbunden sein, um zumindest Teilmengen der Prozessflüssigkeit 11 aus den Sammelbereichen 14 unmittelbar wieder einer der Zonen 5, 6, 7, 8, 9, 10 zuzuführen. Wie im Ausführungsbeispiel gemäß der Fig. 1 dargestellt ist, kann es hierbei beispielsweise zweckmäßig sein, wenn die Umwälzpumpe 13, welche eingangsseitig mit dem Sammelbereich 14 der Anwärmzone 5 leitungsverbunden ist, ausgangsseitig mit der Berieselungsvorrichtung 12 der Abkühlzone 10 leitungsverbunden ist. Dies kann primär deshalb zweckmäßig sein, da sich die Prozessflüssigkeit 11 in Anwärmzone 5 durch die Wärmeaufnahme der Behältnisse 2 bzw. Lebensmittel abkühlt, und nach Durchströmen der Anwärmzone 5 ein zum Abkühlen der Behältnisse 2 in Abkühlzone 10 geeignetes Temperaturniveau aufweist. Eine solche Anordnung kann auch als Energierückgewinnungs- oder Rekuperationsanordnung bezeichnet werden.

Aus denselben Gründen kann eine Zuführung der Prozessflüssigkeit 11 aus dem Sammelbereich 14 der Abkühlzone 10 zu der Berieselungsvorrichtung 12 der Anwärmzone 5 sinnvoll sein, wie dies auch im Ausführungsbeispiel der Pasteurisierungsvorrichtung 1 in der Fig. 1 schematisch veranschaulicht ist. Des Weiteren kann analog auch eine wechselseitige Zuführung der Prozessflüssigkeit 11 von der Anwärmzone 6 in die Abkühlzone 9 und umgekehrt vorgesehen sein.

Wie im Ausführungsbeispiel in der Fig. 1 dargestellt ist, können die den Pasteurisierungszonen bzw. -kammern 7, 8 zugeordneten Umwälzpumpen 13 zur zumindest teilweisen Rückförderung der Prozessflüssigkeit 11 aus dem Sammelraum der Pasteurisierungszone 7 respektive Zone 8 zu den Berieselungsvorrichtungen 12 der entsprechenden Zone 7 respektive Zone 8 vorgesehen sein. In anderen Worten ausgedrückt kann vorgesehen sein, dass zumindest eine Teilmenge der Prozessflüssigkeit 11 im Kreis um die Behandlungszone 7 und um die Behandlungszone 8 geführt wird.

Des Weiteren kann vorgesehen sein, dass Teilmengen der in den Sammelbereichen 14 anfallenden Prozessflüssigkeit 11 anstatt wieder in eine Behandlungszone 5, 6, 7, 8, 9, 10 zurückgepumpt zu werden, wenigstens einem Sammelbecken zugeführt werden. Hierzu kann die Pasteurisierungsvorrichtung 1 Sammelbecken 15, 16 umfassen. Gemäß dem in der Fig. 1 dargestellten Ausführungsbeispiel, kann einerseits ein Sammelbecken 15 angeordnet sein, welches zum Sammeln von Prozessflüssigkeit 11 auf tiefen Temperaturniveau vorgesehen ist. Das Sammelbecken 15 kann insbesondere mit Sammelbereichen 14, in welchen die Prozessflüssigkeit 11 eine verhältnismäßig geringe Temperatur aufweist, leitungsverbunden sein. Im in der Fig. 1 dargestellten Ausführungsbeispiel ist das Sammelbecken 15 daher insbesondere mit den Sammelbereich 14 der Anwärmzone 5 und dem Sammelbereich 14 der Abkühlzone 10 leitungsverbunden.

Bei dem Ausführungsbeispiel gemäß Fig. 1 ist außerdem ein Sammelbecken 16 angeordnet, welches zum Sammeln und Zwischenspeichern von Prozessflüssigkeit mit hohem Temperaturniveau vorgesehen ist. Daher kann es sinnvoll sein, dieses Sammelbecken 16 mit den Sammelbereichen 14 der Pasteurisierungszonen 7, 8 zu verbinden, wie dies auch in der Fig. 1 schematisch veranschaulicht ist. Alle Teilabschnitte der jeweiligen Innenflächen der Sammelbecken 16, 17 können mathematisch glatt ausgestaltet sein, wie dies in der Fig. 1 veranschaulicht ist.

Mittels der Pumpen 13 und eingangsseitig der Pumpen 13 angeordneter Dosiervorrichtungen 17 ist im in der Fig. 1 dargestellten Ausführungsbeispiel den Zufuhr- bzw. Berieselungsvorrichtungen 12 der Behandlungszonen 5, 6, 7, 8, 9, 10 Prozessflüssigkeit 11 mit niedrigem Temperaturniveau aus dem Kältetank 15 zudosierbar. Des Weiteren ist den Berieselungsvorrichtungen 12 der Kammern 5, 6, 7, 8, 9, 10 mittels weiterer Dosiervorrichtungen 17 und den Pumpen 13 auch Prozessflüssigkeit 11 mit mindestens Pasteurisierungstemperatur oder höherer Temperatur aus einem von dem Sammelbecken 16 zu den weiteren Dosiervorrichtungen 17 führendem Vorlauf 18 zudosierbar. Die Dosiervorrichtungen 17 können hierbei beispielsweise durch Durchflussregelventile gebildet sein. Dadurch kann im betrieb der Pasteurisierungsvorrichtung 1 für jede Behandlungszone 5, 6, 7, 8, 9, 10 eine Temperatur der zugeführten Prozessflüssigkeit 11 mit gezielt festlegt bzw. einstellt werden.

Selbstverständlich sind hinsichtlich der Förderung der Prozessflüssigkeit 11 in einer Pasteurisierungsvorrichtung 1 auch andere, alternative Lösungen als die in der Fig. 1 dargestellte möglich. Zum Beispiel kann je nach Einsatzzweck einer Pasteurisierungsvorrichtung 1 ein Zumischen von kalter Prozessflüssigkeit aus dem Sammelbecken 15 zumindest für einige Behandlungskammern erübrigt werden, sodass nicht jede der Pumpen 13 notwendigerweise eingangsseitig mit dem Sammelbecken 15 leitungsverbunden sein muss. Ebenso kann vorgesehen sein, dass wenigstens einige der Pumpen 13 nicht mit dem Prozessflüssigkeit 11 mit mindestens Pasteurisierungstemperatur führenden Vorlauf 18 leitungsverbunden sind.

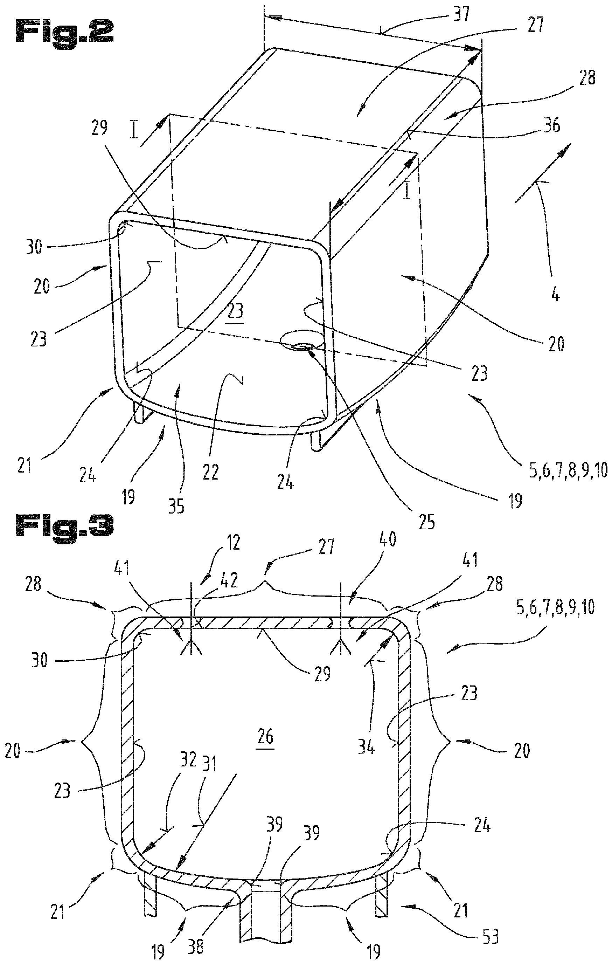

Zur besseren Ersichtlichkeit ist exemplarisch ein Ausführungsbeispiel für eine Behandlungszone 5, 6, 7, 8, 9, 10 bzw. Behandlungskammer in der Fig. 2 in perspektivischer Ansicht dargestellt. Das durch die wenigstens eine Behandlungszone 5, 6, 7, 8, 9, 10 verlaufende Fördermittel 3 (siehe Fig. 1) wird aus Gründen der Übersichtlichkeit in der Fig. 2, und auch in den weiteren Figuren nicht dargestellt.

Wie anhand der Fig. 2 ersichtlich ist, weist die wenigstens eine Behandlungszone 5, 6, 7, 8, 9, 10 zumindest einen Bodenabschnitt 19, zwei Seitenwände 20 und Übergangsabschnitte 21 zwischen dem Bodenabschnitt 19 und den Seitenwänden 20 auf. Der Bodenabschnitt 19 weist eine zu einem Innenraum 26 der wenigstens einen Behandlungszone 5, 6, 7, 8, 9, 10 weisende Innenfläche 22 auf, die Seitenwände 20 weisen jeweils zu dem Innenraum 26 der Behandlungszone 5, 6, 7, 8, 9, 10 weisende Innenflächen 23 auf, und die Übergangsabschnitte 21 weisen jeweils zu dem Inneren der Behandlungszone 5, 6, 7, 8, 9, 10 weisende Innenflächen 24 auf.

Wie des Weiteren in der Fig. 2 und auch schematisch in der Fig. 1 dargestellt ist, weist die wenigstens eine Behandlungszone 5, 6, 7, 8, 9, 10 einen Ablauf 25 zum Abführen der Prozessflüssigkeit auf. Der Ablauf 25 ist hierbei im Bereich des Bodenabschnitts 19 angeordnet. Außerdem weist die zwei Öffnungen 35 zur Zuführung und Abführung der Behältnisse 2 auf. Die Öffnungen 35 befinden sich an einander gegenüberliegenden Endbereichen der wenigstens einen Behandlungszone 5, 6, 7, 8, 9, 10, das heißt die eine Öffnung 35 befindet sich eingangsseitig und die andere Öffnung 35 befindet sich ausgangsseitig der wenigstens einen Behandlungszone 5, 6, 7, 8, 9, 10. Wie aus der Fig. 1 ersichtlich ist, können die Behältnisse 2 im Betrieb der Pasteurisierungsvorrichtung 1 mittels des Fördermittels 3 einer Behandlungszone 5, 6, 7, 8, 9, 10 zugeführt und aus einer Behandlungszone 5, 6, 7, 8, 9, 10 abgeführt werden, bzw. durch eine Behandlungszone 5, 6, 7, 8, 9, 10 befördert werden.

Wesentlich ist, dass in der wenigstens einen Behandlungszone 5, 6, 7, 8, 9, 10 alle Teilabschnitte der Innenfläche 22 des Bodenabschnitts 19, alle Teilabschnitte der Innenflächen 24 der Übergangsabschnitte 21 und alle Teilabschnitte der Innenflächen 23 der Seitenwände 20 mathematisch glatt ausgestaltet sind, wobei alle Übergänge zwischen aneinandergrenzenden Teilabschnitten der Innenflächen 22, 23, 24 mathematisch glatt ausgestaltet sind.

Zum besseren Verständnis ist ein Ausführungsbeispiel für eine Behandlungszone 5, 6, 7, 8, 9, 10 in der Fig. 3 in Vertikalschnittansicht dargestellt. Der Vertikalschnitt ist hierbei entlang einer durch die Mitte der Längserstreckung 36 der wenigstens einen Behandlungszone 5, 6, 7, 8, 9, 10 verlaufenden, vertikalen Ebene I, I ausgeführt, wie dies aus der Fig. 2 ersichtlich ist. Eine Längserstreckung 36 der wenigstens einen Behandlungszone 5, 6, 7, 8, 9, 10, entspricht einem Abstand der einander gegenüberliegenden Öffnungen 35. Eine Breitenerstreckung 37 der wenigstens einen Behandlungszone 5, 6, 7, 8, 9, 10, entspricht der maximalen Ausdehnung der wenigstens einen Behandlungszone 5, 6, 7, 8, 9, 10 in horizontaler Richtung quer zu der Transportrichtung 4. Grundsätzlich sind hierbei unterschiedlichste Verhältnisse für Längserstreckungen 36 und Breitenerstreckungen 37 der wenigstens einen Behandlungszone 5, 6, 7, 8, 9, 10 denkbar. Beispielweise können sich die Längserstreckung 36 und die Breitenerstreckung 37 zumindest annähend gleichen.

In der Fig. 3 werden für gleiche Teile gleiche Bezugszeichen bzw. Bauteilbezeichnungen wie in den vorangegangenen Fig. 1 und 2 verwendet. Um unnötige Wiederholungen zu vermeiden, wird auf die detaillierte Beschreibung in den vorangegangenen Fig. 1 und 2 hingewiesen bzw. Bezug genommen.

In der Schnittansicht gemäß Fig. 3 sind wiederum die Innenfläche 22 des Bodenabschnitts 19, die Innenflächen 23 der Seitenwände 20 und die Innenflächen 24 der Übergangsabschnitte 21 schematisch dargestellt. Wie weiters in der Fig. 3 veranschaulicht ist, kann vorgesehen sein, dass alle Punkte auf der Innenfläche 22 des Bodenabschnitts 19 für alle möglichen Raumrichtungen einen Krümmungsradius 31 von mindestens 20 mm, vorzugsweise mindestens 100 mm aufweisen. Es weist also an einer Stelle mit der - für alle möglichen Raumrichtungen betrachtet - stärksten Krümmung der Innenfläche 22 des Bodenabschnittes 19, die Innenfläche 22 an dieser Stelle einen Krümmungsradius 31 von mindestens 20 mm, und bevorzugt mindestens 100 mm auf. In anderen Worten ausgedrückt weist - in allen möglichen Raumrichtungen betrachtet - ein an der Stelle mit der stärksten Krümmung der Innenfläche 22 des Bodenabschnittes 19 angeschmiegter Krümmungskreis einen Radius von mindestens 100 mm auf. Die Innenfläche 22 des Bodenabschnitts 19 kann im Speziellen wannenförmig ausgestaltet sein.

Außerdem kann vorgesehen sein, dass alle Punkte auf der Innenfläche 24 des Übergangsabschnittes 21 für alle möglichen Raumrichtungen einen Krümmungsradius 32 von mindestens 10 mm, bevorzugt mindestens 50 mm aufweisen, wie dies ebenfalls in der Fig. 3 veranschaulicht ist. Die Innenflächen 23 der Seitenwände 20 können, in vertikaler Richtung betrachtet, einen weitestgehend ebenen Verlauf aufweisen, wie dies anhand der in der Fig.2 oder Fig. 3 dargestellten Ausführungsbeispiele erkennbar ist. Es ist aber auch möglich, dass die Innenflächen 23 oder zumindest Teilabschnitte der Innenflächen 23 der Seitenwände 20, bezogen auf den Innenraum 26, zumindest abschnittsweise einen geringfügig gekrümmten Verlauf aufweisen.

Des Weiteren ist in dem Ausführungsbeispiel gemäß Fig. 3 im Bereich des Bodenabschnitts 19 der wenigstens einen Behandlungszone 5, 6, 7, 8, 9, 10 ein Ablauf 25 dargestellt. Der Ablauf ist hierbei an einer tiefsten Stelle des Bodenabschnitts angeordnet. Wie aus der Fig. 3 ersichtlich ist, kann der der Ablauf 25 der wenigstens einen Behandlungszone 5, 6, 7, 8, 9, 10 einen in den Bodenabschnitt 19 mündenden Übergang 38 aufweisen. Hierbei kann eine Innenfläche 39 dieses Übergangs 38, bezogen auf den Innenraum 26 der wenigstens einen Behandlungszone 5, 6, 7, 8, 9, 10 vollumfänglich gekrümmt, aber an jeder Stelle mathematisch glatt ausgestaltet sein, wie anhand des Ausführungsbeispiels in Fig. 3 veranschaulicht ist. Auch hierdurch ist eine nochmalige Verbesserung der Reinigungseffizienz für eine Kammer 5, 6, 7, 8, 9, 10 erzielbar.

Wie weiters aus der Fig. 3, aber auch aus der Fig. 2 ersichtlich ist, kann die wenigstens eine Behandlungszone 5, 6, 7, 8, 9, 10 einen oberen Abdeckungsabschnitt 27 und weitere Übergangsabschnitte 28 zwischen dem oberen Abdeckungsabschnitt 27 und den Seitenwänden 20 aufweisen. Hierbei können auch alle Teilabschnitte einer Innenfläche 29 des oberen Abdeckungsabschnitts 27 und alle Teilabschnitte von Innenflächen 30 der weiteren Übergangsabschnitte 28 mathematisch glatt ausgestaltet sein, wobei alle Übergänge zwischen aneinandergrenzenden Teilabschnitten dieser Innenflächen 23, 29, 30 mathematisch glatt ausgestaltet sein können.

Insofern bei der Ausgestaltung der Innenflächen 22, 23, 24, 29, 30 bzw. von Teilabschnitten der Innenflächen 22, 23, 24, 29, 30 der wenigstens einen Behandlungszone bzw. -kammer 5, 6, 7, 8, 9, 10 davon die Rede ist, dass diese "glatt bzw. mathematisch glatt" sein sollen, so sind damit ebene oder gekrümmte Oberflächen der Behälterwand der Behandlungszone 5, 6, 7, 8, 9, 10 gemeint. Bekanntlich wird ja in der Mathematik bzw. Geometrie dann von einer glatten Fläche gesprochen, wenn die die Fläche beschreibende Funktion stückweise stetig differenzierbar ist. Dies ist gleichbedeutend damit, dass die Tangentialebenen an die Fläche zu einander benachbarten Punkten auf der Fläche stetig veränderlich sind. Analog dazu sind glatte Raumkurven stetig und stetig differenzierbar. Im Gegensatz dazu hat eine mathematisch nicht glatte Fläche Punkte oder Kurven, an denen die Ableitung bzw. die Tangentialebene nicht eindeutig ist. Beispiele solcher Punkte oder Kurven einer Fläche sind Ecken oder Kanten.

Andererseits soll bei der Verwendung des Begriffs "glatt" aber von herstellungsbedingten, insbesondere mikroskopischen Oberflächenrauigkeiten abgesehen werden. Solche herstellungsbedingten Oberflächenrauigkeiten können beispielsweise im ein- oder zweistelligen Mikrometerbereich, oder im Bereich von weniger als 1 µm vorliegen. Insofern liegen auch, wenn von gekrümmten Teilabschnitten die Rede ist, die Bereiche der lokalen Krümmungsradien von einzelnen Stellen bzw. von Punkten der Innenflächen Größenordnungen über den Werten der zu erwartenden Rautiefen der für die Behälterwände verwendeten Materialien. Im Speziellen soll unter einer mathematisch glatten Fläche bzw. Innenfläche, eine Fläche verstanden werden, welche makroskopisch betrachtet mathematisch glatt ist. In anderen Worten ausgedrückt soll eine mathematisch glatte Fläche eine Fläche sein, deren makroskopischer Verlauf im Raum mathematisch glatt ist. Im Besonderen soll unter einer glatten bzw. mathematisch gatten Fläche eine Fläche verstanden werden, welche mit dem bloßen, menschlichen Auge betrachtet glatt erscheint.

Die wenigstens eine Behandlungszone 5, 6, 7, 8, 9, 10 kann zum Aufstellen auf einem Untergrund beispielsweise ein Gestell 53 aufweisen. Die Innenfläche 29 des oberen Abdeckungsabschnitts 27 kann, wie bei dem in der Fig. 2 und der Fig. 3 dargestellten Ausführungsbeispielen, eben ausgestaltet sein. Hierbei können die Innenflächen 30 der weiteren Übergangsabschnitte 29 bezogen auf den Innenraum 26 konkav gekrümmt ausgestaltet.

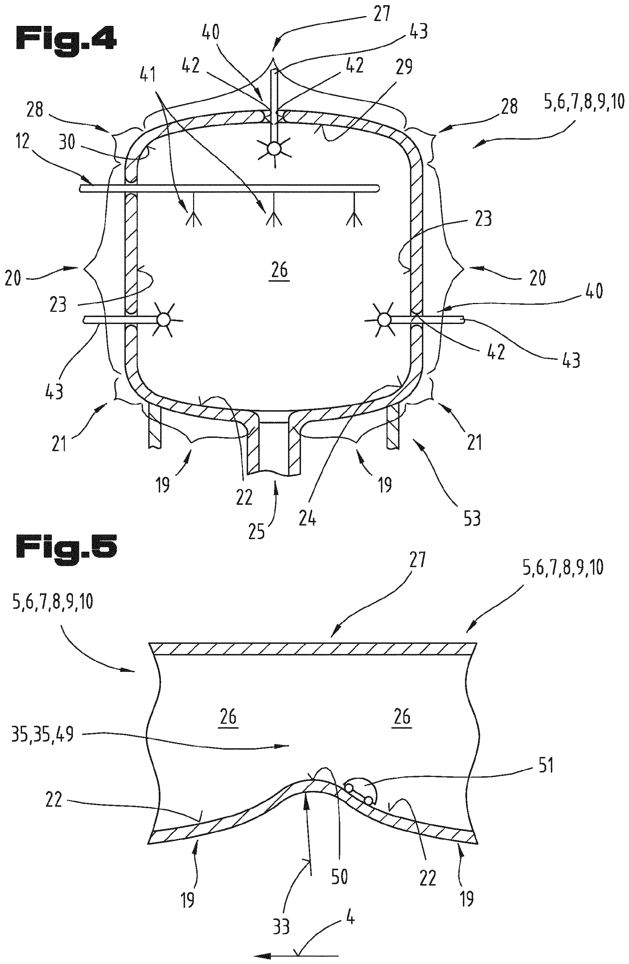

Es kann aber auch von Vorteil sein, dass die Innenfläche 29 des oberen Abdeckungsabschnitts 27 bezogen auf den Innenraum 26 konkav gekrümmt ausgestaltet sind, und die Innenflächen 30 der weiteren Übergangsabschnitte 29 bezogen auf den Innenraum 26 wiederum konkav gekrümmt ausgestaltet sind. Ein solches Ausführungsbeispiel für eine Behandlungszone 5, 6, 7, 8, 9, 10 ist in der Fig. 4 wiederum in Vertikalschnittansicht veranschaulicht. Wie in der Fig. 3 ist der Vertikalschnitt auch in der Fig. 4 entlang einer durch die Mitte einer Längserstreckung 36 der wenigstens einen Behandlungszone 5, 6, 7, 8, 9, 10 verlaufenden, vertikalen Ebene gewählt. In der Fig. 4 werden für gleiche Teile gleiche Bezugszeichen bzw. Bauteilbezeichnungen wie in den vorangegangenen Fig. 1 bis 3 verwendet. Um unnötige Wiederholungen zu vermeiden, wird auf die detaillierte Beschreibung in den vorangegangenen Fig. 1 bis 3 hingewiesen bzw. Bezug genommen.

Bei dem in der Fig.4 dargestellten Ausführungsbeispiel für eine Behandlungszone können die Seitenwände 20 sich zu einer umlaufenden Seitenwand 20 mit einer zusammenhängenden Innenfläche 23 ergänzen, in welcher Seitenwand 20 die zwei Öffnungen 35 zum Zuführen und Abführen der Behältnisse 2 ausgestaltet sind. Dementsprechend können sich auch die Übergangsabschnitte 21 zu einem umlaufenden Übergangsabschnitt 21 mit einer Innenfläche 24, und die weiteren Übergangsabschnitte 28 zu einem umlaufenden, weiterer Übergangsabschnitt 28 mit einer Innenfläche 30 ergänzen.

Bei dem Ausführungsbeispiel gemäß Fig. 4, können der Bodenabschnitt 19 und der Übergangsabschnitt 21, der wenigstens einen Behandlungszone 5, 6, 7, 8, 9, 10, respektive zumindest deren Innenflächen 22, 24, einen einem Ellipsoid-Segment zumindest weitestgehend entsprechenden, geometrischen Verlauf zeigen. Selbiges gilt auch für den geometrischen Verlauf zumindest der Innenflächen 29, 30 des oberen Abdeckungsabschnitts 27 und des weiteren Übergangsabschnittes 28. Insgesamt kann der geometrische Verlauf der Außenflächen der wenigstens einen Behandlungszone 5, 6, 7, 8, 9, 10 dem geometrischen Verlauf der Innenflächen 22, 23, 24, 29, 30 in allen Abschnitten zumindest ähnlich sein. Andererseits können durchaus Abweichungen zwischen dem geometrischen Verlauf der Außenflächen und dem geometrischen Verlauf der Innenflächen 22, 23, 24, 29, 30 vorhanden sein.

In diesem Zusammenhang können die Innenflächen 22, 23, 24, 29, 30 grundsätzlich aus demselben Material bestehen wie die Außenflächen, sodass die Abschnitte 19, 20, 21, 27, 28 Wände aus einem einheitlichen Material umfassen. Hierbei kann es sich zum Beispiel um Formstücke aus Metall, Kunststoff, Verbundwerkstoff oder Keramik handeln. Es kann aber durchaus auch vorgesehen sein, dass die Innenflächen 22, 23, 24, 29, 30 aus einem anderen Material bestehen wie die Außenflächen der wenigstens einen Behandlungszone 5, 6, 7, 8, 9, 10, und können die Innenflächen 22, 23, 24, 29, 30 beispielsweise durch Flächen von Auskleidung(en), beispielsweise aus plastisch geformtem Kunststoff, Verbundwerkstoff oder auch durch flexible Kunststofffolien gebildet sein.

Grundsätzlich kann vorgesehen sein, dass die Innenflächen 22, 23, 24, 29, 30 der wenigstens einen Behandlungszone 5, 6, 7, 8, 9, 10 durch ein Material, ausgewählt aus einer Gruppe bestehend aus Kunststoff, Kunststoffverbundmaterial, faserverstärkten Kunststoff, Edelstahl, Aluminium oder Keramik gebildet sind. Im Speziellen können polierte Materialien bzw. Materialien mit möglichst geringer Oberflächenrauheit und gleichzeitig hoher Widerstandsfähigkeit gegenüber der Prozessflüssigkeit verwendet bzw. eingesetzt werden, wie etwa polierter Edelstahl oder Aluminium, oder plastisch geformte Kunststoffe, Verbundwerkstoffe, aber auch Kunststofffolien.

Im Besonderen kann grundsätzlich vorgesehen sein, dass alle Übergänge zwischen Teilabschnitten von aneinandergrenzenden Innenflächen 22, 23, 24, 29, 30 mathematisch glatt ausgestaltet sind, oder dass alle Übergänge zwischen Teilabschnitten von aneinandergrenzenden Innenflächen 22, 23, 24, 29, 30 berggrat-artig zum Innenraum 26 hin vorspringend ausgestaltet sind. Hierdurch kann die Tendenz zur Bildung von Ablagerungen auch im Bereich von aneinandergrenzenden Innenflächen 22, 23, 24, 29, 30 der wenigstens einen Behandlungszone 5, 6, 7, 8, 9, 10 verringert werden, da bezüglich des Innenraums 26 spitzwinkelig zusammenlaufende Ecken oder Kanten vermieden werden können. Bevorzugt sind alle Übergänge zwischen Teilabschnitten von aneinandergrenzenden Innenflächen 22, 23, 24, 29, 30 mathematisch glatt ausgestaltet.

Unabhängig von der Ausgestaltung, insbesondere des oberen Abdeckungsabschnitts 27, kann vorgesehen sein, dass alle Punkte auf der Innenfläche 30 der weiteren Übergangsabschnitte 28 für alle möglichen Raumrichtungen einen Krümmungsradius 34 von mindestens 10 mm, vorzugsweise mindestens 50 mm aufweisen, wie dies anhand des in der Fig. 3 dargestellten Ausführungsbeispiels veranschaulicht ist.

Wie aus der Fig. 3 und der Fig. 4 ersichtlich ist, kann die wenigstens eine Behandlungszone 5, 6, 7, 8, 9, 10 zumindest eine runde oder ovale Öffnung 40 aufweisen. Eine Innenseite eines Umrandungssegments 42 der Öffnung 40 kann dabei mathematisch glatt ausgestaltet sein.

Grundsätzlich können solche Öffnungen 40 in den Abschnitten 19, 20, 21, 27, 28 vorgesehen sein. Solche Öffnungen 40 können beispielsweise zum Einführen diverser Sensorelemente oder etwa für Waschvorrichtung 43 in die wenigstens eine Behandlungszone 5, 6, 7, 8, 9, 10 vorgesehen sein, wie dies schematisch in der Fig. 4 veranschaulicht ist. Ganz grundsätzlich kann vorgesehen sein, dass der wenigstens einen Behandlungszone 5, 6, 7, 8, 9, 10 eine Waschvorrichtung 43 zur Reinigung der Innenflächen 22, 23, 24, 29, 30 zugeordnet ist. Im Prinzip ist es auch möglich, dass ein Zuführmittel 41 der Zufuhrvorrichtung 12, etwa eine Zufuhrleitung zum Zuführen der temperierten Prozessflüssigkeit über derartige Öffnungen 40 in den Innenraum 26 eingebracht ist. Alternativ kann ein Zuführmittel 41 der Zufuhrvorrichtung 12 aber auch auf andere Weise, wie etwa über Flansch- oder Schweißverbindungen in den Innenraum 26 einer Behandlungszone 5, 6, 7, 8, 9, 10 eingeführt sein.

Eine Pasteurisierungsvorrichtung 1 kann mehrere, aneinandergrenzend angeordnete Behandlungszonen 5, 6, 7, 8, 9, 10 umfassen, wie dies zum Beispiel anhand der Fig. 1 ersichtlich ist. Die Behandlungszonen 5, 6, 7, 8, 9, 10 können hierbei gemäß den in den Fig. 2 bis Fig. 4 dargestellten Ausführungsbeispielen ausgestaltet sein. Die Öffnungen 35 zweier aneinandergrenzender Behandlungszonen 5, 6, 7, 8, 9, 10 bilden einen Durchtrittkanal 49 für das Fördermittel 3 und die Behältnisse 2 aus. Hierbei kann vorgesehen sein, dass alle Übergänge zwischen Innenflächen 22, 23, 24, 29, 30 benachbarter Behandlungszonen 5, 6, 7, 8, 9, 10 im Bereich eines Durchtrittkanals 49 mathematisch glatt oder berggratartig zu den Innenräumen 26 der Behandlungszonen 5, 6, 7, 8, 9, 10 vorspringend ausgestaltet sind.

Ganz grundsätzlich kann vorgesehen sein, dass eine Pasteurisierungsvorrichtung 1 modulartig aus mehreren Behandlungszonen 5, 6, 7, 8, 9, 10 aufgebaut ist. Die Behandlungszonen 5, 6, 7, 8, 9, 10 können hierbei grundsätzlich formschlüssig miteinander verbunden sein, wobei hierbei möglichst passgenaue Übergänge im Bereich eines Durchtrittkanals 49 bevorzugt sind. Hierbei können im Bereich eines Durchtrittkanals 49 zum Beispiel auch Auskleidungen, wie etwa Folien oder Dichtungen vorgesehen sein, sodass die Innenflächen 22, 23, 24, 29, 30 im Bereich eines Durchtrittkanals 49 durch solch Auskleidungen gebildet sind. Es ist aber auch möglich, dass die Übergänge im Bereich eines Durchtrittkanals 49 materialschlüssig sind, zum Beispiel, dass zwei Behandlungszonen 5, 6, 7, 8, 9, 10 über Schweißverbindungen miteinander verbunden sind.

In der Fig. 5 sind ausschnittsweise zwei Behandlungszonen 5, 6, 7, 8, 9, 10 im Bereich eines Durchtrittkanals 49 dargestellt. Die Vertikalschnittansicht in der Fig. 5 ist entlang einer parallel zur Transportrichtung 4 verlaufenden, vertikalen Schnittebene gewählt. In der Fig. 5 werden für gleiche Teile gleiche Bezugszeichen bzw. Bauteilbezeichnungen wie in den vorangegangenen Fig. 1 bis 4 verwendet. Um unnötige Wiederholungen zu vermeiden, wird auf die detaillierte Beschreibung in den vorangegangenen Fig. 1 bis 4 hingewiesen bzw. Bezug genommen.

Wie in der Fig. 5 veranschaulicht ist, kann eine durch die Innenflächen 22 aneinandergrenzender Bodenabschnitte 19 gebildete Innenfläche 50 im Bereich eines Durchtrittkanals 49 zu den Innenräumen 26 der Behandlungszonen 5, 6, 7, 8, 9, 10 konvex gekrümmt ausgestaltet sein. Hierbei kann außerdem vorgesehen sein, dass im Bereich aneinandergrenzender Bodenabschnitte 19 alle Punkte der Innenfläche 50 für alle möglichen Raumrichtungen einen Krümmungsradius 33 von mindestens 50 mm, vorzugsweise mindestens 100 mm aufweisen.

Die schematisch in der Fig. 2 und Fig. 5 dargestellten Krümmungsradien 31, 32, 33, 34 sind zur Veranschaulichung der Mindestkrümmungen der Innenflächen 21, 24, 30, 50 in den jeweiligen, entsprechenden Abschnitten 19, 21, 27, 49 dargestellt, und sind diese Krümmungsradien 31, 32, 33, 34 nicht maßstäblich bzw. maßbezogen dargestellt. Es wird diesbezüglich auf die jeweils in der Beschreibung angeführten Grenzwerte bzw. Mindestwerte für die entsprechenden Krümmungsradien 31, 32, 33, 34 verwiesen.

Es kann vorgesehen sein, dass alle Teilabschnitte der Innenflächen 22 der Bodenabschnitte 19 mit einer Vertikalerstreckung von mindestens 10 cm, einen Steigungswinkel gegenüber einer Horizontalebene von höchstens 45° aufweisen. In weiterer Folge kann dann auch vorgesehen sein, dass den Innenflächen 22 der Bodenabschnitte 19 und der oder den Innenfläche(n) 50 im Bereich aneinandergrenzender Bodenabschnitte 19 im Bereich des Durchtrittkanals 49 oder der Durchtrittkanäle 49 eine mobile Reinigungsvorrichtung 51 zugeordnet ist. Vorteilhaft ist bei dem Ausführungsbeispiel gemäß der Fig. 5, dass zumindest die Innenflächen 22 der Bodenabschnitte 19, respektive die durch aneinandergrenzende Innenflächen 22 der Bodenabschnitte 19 gebildete Innenfläche 50 problemlos durch die mobile Reinigungsvorrichtung 51 gereinigt werden können, wobei auch ein problemloses Übertreten der mobilen Reinigungsvorrichtung 51 von einer Behandlungszone 5, 6, 7, 8, 9, 10 in eine angrenzende Behandlungszone 5, 6, 7, 8, 9, 10 ermöglicht ist.

Wie in der Fig. 1 veranschaulicht ist, kann schließlich auch vorgesehen sein, dass die Zufuhrvorrichtung 12, sowie der Ablauf 25 der wenigstens einen Behandlungszone 5, 6, 7, 8, 9, 10 mit einem Umlaufkreislauf 44 zur Wiederverwendung der Prozessflüssigkeit leitungsverbunden sind. Hierbei kann dem Umlaufkreislauf 44 ein Entnahmemittel 45 zur Entnahme einer Teilmenge pro Zeiteinheit der Prozessflüssigkeit aus dem Umlaufkreislauf 44 zugeordnet sein. Die Pasteurisierungsvorrichtung 1 kann eine Reinigungsvorrichtung 46, aufweisend wenigstens eine Membranfiltrationsvorrichtung 47 zur Reinigung der pro Zeiteinheit entnommenen Teilmenge der Prozessflüssigkeit umfassen. Des Weiteren kann die Pasteurisierungsvorrichtung 1 ein Rückführmittel 48 zur Rückführung der gereinigten Prozessflüssigkeit in eine Behandlungszone 5, 6, 7, 8, 9, 10 umfassen.

Hierdurch kann die Prozessflüssigkeit im laufenden Betrieb der Pasteurisierungsvorrichtung 1 fortwährend gereinigt werden, insbesondere können Schweb- und Trübstoffen bzw. partikulären Verschmutzungen aus der Prozessflüssigkeit fortwährend entfernt werden. In weiterer Folge kann so auch die Bildung von Ablagerungen an den Innenflächen 22, 23, 24, 29, 30 der wenigstens einen Behandlungszone 5, 6, 7, 8, 9, 10 hintangehalten werden, was die Reinigungseffizienz für die Innenflächen 22, 23, 24, 29, 30 weiter verbessert.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Pasteurisierungsvorrichtung | 36 | Längserstreckung |
| 2 | Behältnis | 37 | Breitenerstreckung |
| 3 | Fördermittel | 38 | Übergang |
| 4 | Transportrichtung | 39 | Innenfläche |
| 5 | Anwärmkammer | 40 | Öffnung |
| | | | |
| 6 | Anwärmkammer | 41 | Zuführmittel |
| 7 | Pasteurisierungskammer | 42 | Umrandungssegment |
| 8 | Pasteurisierungskammer | 43 | Waschvorrichtung |
| 9 | Abkühlkammer | 44 | Umlaufkreislauf |
| 10 | Abkühlkammer | 45 | Entnahmemittel |
| | | | |
| 11 | Prozessflüssigkeit | | |
| 12 | Zufuhrvorrichtung | 46 | Reinigungsvorrichtung |
| 13 | Umwälzpumpe | 47 | Membranfiltrationsvorrichtung |
| 14 | Sammelbereich | 48 | Rückführmittel |
| 15 | Sammelbecken | 49 | Durchtrittkanal |
| | | 50 | Innenfläche |
| 16 | Sammelbecken | | |
| 17 | Dosiervorrichtung | 51 | Reinigungsvorrichtung |
| 18 | Vorlauf | 52 | Wärmetauscher |
| 19 | Bodenabschnitt | 53 | Gestell |
| 20 | Seitenwand | | |
| | | | |
| 21 | Übergangsabschnitt | | |
| 22 | Innenfläche | | |
| 23 | Innenfläche | | |
| 24 | Innenfläche | | |
| 25 | Ablauf | | |
| | | | |
| 26 | Innenraum | | |
| 27 | Abdeckungsabschnitt | | |
| 28 | Übergangsabschnitt | | |
| 29 | Innenfläche | | |
| 30 | Innenfläche | | |
| | | | |
| 31 | Krümmungsradius | | |
| 32 | Krümmungsradius | | |
| 33 | Krümmungsradius | | |
| 34 | Krümmungsradius | | |
| 35 | Öffnung | | |

## Patentansprüche

1. Pasteurisierungsvorrichtung (1), umfassend
wenigstens eine Behandlungszone (5, 6, 7, 8, 9, 10) zur Behandlung von in verschlossenen Behältnissen (2) abgefüllten Lebensmitteln mit einer temperierten Prozessflüssigkeit (11),
welche wenigstens eine Behandlungszone (5, 6, 7, 8, 9, 10) zumindest einen Bodenabschnitt (19), zwei Seitenwände (20) und Übergangsabschnitte (21) zwischen dem Bodenabschnitt (19) und den Seitenwänden (20) aufweist, wobei der Bodenabschnitt (19), die Seitenwände (20) und die Übergangsabschnitte (21) jeweils eine zu einem Innenraum (26) der Behandlungszone (5, 6, 7, 8, 9, 10) weisende Innenfläche (22, 23, 24) aufweisen,
und welcher wenigstens einen Behandlungszone (5, 6, 7, 8, 9, 10) mindestens eine Zufuhrvorrichtung (12) zur Zuführung temperierter Prozessflüssigkeit zugeordnet ist, und welche wenigstens eine Behandlungszone (5, 6, 7, 8, 9, 10) einen Ablauf (25) zum Abführen der Prozessflüssigkeit aufweist, welcher Ablauf (25) im Bereich des Bodenabschnitts (19) angeordnet ist,
und welche wenigstens einen Behandlungszone (5, 6, 7, 8, 9, 10) zwei Öffnungen (35) zur Zuführung und Abführung der Behältnisse (2) aufweist, wobei ein Fördermittel (3) zur Beförderung der Behältnisse (2) durch die wenigstens eine Behandlungszone (5, 6, 7, 8, 9, 10) vorgesehen ist,
**dadurch gekennzeichnet, dass**
alle Teilabschnitte der Innenfläche (22) des Bodenabschnitts (19), alle Teilabschnitte der Innenflächen (24) der Übergangsabschnitte (21) und alle Teilabschnitte der Innenflächen (23) der Seitenwände (20) mathematisch glatt ausgestaltet sind.
wobei alle Übergänge zwischen aneinandergrenzenden Teilabschnitten der Innenflächen (22, 23, 24) mathematisch glatt ausgestaltet sind.

2. Pasteurisierungsvorrichtung nach Anspruch 1, **dadurch gekennzeichnet, dass** alle Punkte auf der Innenfläche (22) des Bodenabschnitts (19) für alle möglichen Raumrichtungen einen Krümmungsradius (31) von mindestens 20 mm aufweisen, und dass alle Punkte auf der Innenfläche (24) des Übergangsabschnittes (21) für alle möglichen Raumrichtungen einen Krümmungsradius (32) von mindestens 10 mm aufweisen.

3. Pasteurisierungsvorrichtung nach Anspruch 1 oder 2, **dadurch gekennzeichnet, dass** der Ablauf (25) der wenigstens einen Behandlungszone (5, 6, 7, 8, 9, 10) einen in den Bodenabschnitt (19) mündenden Übergang (38) aufweist, wobei eine Innenfläche (39) dieses Übergangs (38), bezogen auf den Innenraum (26) der wenigstens einen Behandlungszone (5, 6, 7, 8, 9, 10), vollumfänglich gekrümmt, aber an jeder Stelle mathematisch glatt ausgestaltet ist.

4. Pasteurisierungsvorrichtung nach einem der vorhergehenden Ansprüche, **dadurch gekennzeichnet, dass** die wenigstens eine Behandlungszone (5, 6, 7, 8, 9, 10) einen oberen Abdeckungsabschnitt (27) und weitere Übergangsabschnitte (28) zwischen dem oberen Abdeckungsabschnitt (27) und den Seitenwänden (20) aufweist, wobei alle Teilabschnitte einer Innenfläche (29) des oberen Abdeckungsabschnitts (27) und alle Teilabschnitte von Innenflächen (30) der weiteren Übergangsabschnitte (28) mathematisch glatt ausgestaltet sind, wobei alle Übergänge zwischen aneinandergrenzenden Teilabschnitten dieser Innenflächen (23, 29, 30) mathematisch glatt ausgestaltet sind.

5. Pasteurisierungsvorrichtung nach Anspruch 4, **dadurch gekennzeichnet, dass** die Innenfläche (29) des oberen Abdeckungsabschnitts (27) eben oder bezogen auf den Innenraum (26) konkav gekrümmt ausgestaltet ist, und dass die Innenflächen (30) der weiteren Übergangsabschnitte (29) bezogen auf den Innenraum (26) konkav gekrümmt ausgestaltet sind.

6. Pasteurisierungsvorrichtung nach Anspruch 4 oder 5, **dadurch gekennzeichnet, dass** alle Punkte auf der Innenfläche (30) der weiteren Übergangsabschnitte (28) für alle möglichen Raumrichtungen einen Krümmungsradius (34) von mindestens 10 mm aufweisen.

7. Pasteurisierungsvorrichtung nach einem der vorhergehenden Ansprüche, **dadurch gekennzeichnet, dass** die wenigstens eine Behandlungszone (5, 6, 7, 8, 9, 10) zumindest eine runde oder ovale Öffnung (40) aufweist, wobei eine Innenseite eines Umrandungssegments (42) der Öffnung (40) mathematisch glatt ausgestaltet ist.

8. Pasteurisierungsvorrichtung nach einem der vorhergehenden Ansprüche, **dadurch gekennzeichnet, dass** alle Übergänge zwischen Teilabschnitten von aneinandergrenzenden Innenflächen (22, 23, 24, 29, 30) mathematisch glatt ausgestaltet sind, oder dass alle Übergänge zwischen Teilabschnitten von aneinandergrenzenden Innenflächen (22, 23, 24, 29, 30) berggrat-artig zum Innenraum (26) hin vorspringend ausgestaltet sind.

9. Pasteurisierungsvorrichtung nach einem der vorhergehenden Ansprüche, **dadurch gekennzeichnet, dass** der wenigstens einen Behandlungszone (5, 6, 7, 8, 9, 10) eine Waschvorrichtung (43) zur Reinigung der Innenflächen (22, 23, 24, 29, 30) zugeordnet ist.

10. Pasteurisierungsvorrichtung nach einem der vorhergehenden Ansprüche, **dadurch gekennzeichnet, dass** mehrere Behandlungszonen (5, 6, 7, 8, 9, 10) aneinandergrenzend angeordnet sind, wobei Öffnungen (35) zweier aneinandergrenzender Behandlungszonen (5, 6, 7, 8, 9, 10) einen Durchtrittkanal (49) für das Fördermittel (3) und die Behältnisse (2) ausbilden, wobei alle Übergänge zwischen Innenflächen (22, 23, 24, 29, 30) benachbarter Behandlungszonen (5, 6, 7, 8, 9, 10) im Bereich eines Durchtrittkanals (49) mathematisch glatt oder berggratartig zu den Innenräumen (26) der Behandlungszonen (5, 6, 7, 8, 9, 10) vorspringend ausgestaltet sind.

11. Pasteurisierungsvorrichtung nach Anspruch 10, **dadurch gekennzeichnet, dass** eine durch die Innenflächen (22) aneinandergrenzender Bodenabschnitte (19) gebildete Innenfläche (50) im Bereich eines Durchtrittkanals (49) zu den Innenräumen (26) der Behandlungszonen (5, 6, 7, 8, 9, 10) konvex gekrümmt ausgestaltet ist, wobei im Bereich aneinandergrenzender Bodenabschnitte (19) alle Punkte der Innenfläche (50) für alle möglichen Raumrichtungen einen Krümmungsradius (33) von mindestens 50 mm aufweisen.

12. Pasteurisierungsvorrichtung nach Anspruch 11, **dadurch gekennzeichnet, dass**, alle Teilabschnitte der Innenflächen (22) der Bodenabschnitte (19) mit einer Vertikalerstreckung von mindestens 10 cm, einen Steigungswinkel gegenüber einer Horizontalebene von höchstens 45 ° aufweisen.

13. Pasteurisierungsvorrichtung nach Anspruch 12, **dadurch gekennzeichnet, dass** den Innenflächen (22) der Bodenabschnitte (19) und der oder den Innenfläche(n) (50) im Bereich aneinandergrenzender Bodenabschnitte (19) im Bereich des Durchtrittkanals (49) oder der Durchtrittkanäle (49) eine mobile Reinigungsvorrichtung (51) zugeordnet ist.

14. Pasteurisierungsvorrichtung nach einem der vorhergehenden Ansprüche, **dadurch gekennzeichnet, dass** die Zufuhrvorrichtung (12), sowie der Ablauf (25) der wenigstens einen Behandlungszone (5, 6, 7, 8, 9, 10) mit einem Umlaufkreislauf (44) zur Wiederverwendung der Prozessflüssigkeit leitungsverbunden sind, wobei dem Umlaufkreislauf (44) ein Entnahmemittel (45) zur Entnahme einer Teilmenge pro Zeiteinheit der Prozessflüssigkeit aus dem Umlaufkreislauf (44) zugeordnet ist, und dass die Pasteurisierungsvorrichtung (1) eine Reinigungsvorrichtung (46), aufweisend wenigstens eine Membranfiltrationsvorrichtung (47) zur Reinigung der pro Zeiteinheit entnommenen Teilmenge der Prozessflüssigkeit umfasst, und ein Rückführmittel (48) zur Rückführung der gereinigten Prozessflüssigkeit in die wenigstens eine Behandlungszone (5, 6, 7, 8, 9, 10) umfasst.
